(19) Europäisches Patentamt
European Patent Office
Office européen des brevets

(11) Publication number: 0 072 684 A1

(12) # EUROPEAN PATENT APPLICATION

(21) Application number: 82304291.6

(22) Date of filing: 13.08.82

(51) Int. Cl.[3]: C 09 J 3/14
C 08 J 5/04, C 08 J 5/12
B 32 B 5/18, B 32 B 17/04
B 60 R 13/02

(30) Priority: 18.08.81 US 293829

(43) Date of publication of application: 23.02.83 Bulletin 83/8

(84) Designated Contracting States: AT BE CH DE FR GB IT LI NL SE

(71) Applicant: Rohm and Haas Company
Independence Mall West
Philadelphia, Pennsylvania 19105(US)

(72) Inventor: Plamondon, Joseph Edward
55 Mill Creek Road
Holland Pennsylvania 18966(US)

(72) Inventor: Moberly, John Albert
7813 Farnsworth Street
Philadelphia Pennsylvania 19152(US)

(74) Representative: Angell, David Whilton et al,
Rohm and Haas Company Patent Department
Chesterfield House Bloomsbury Way
London WC1A 2TP(GB)

(54) **Adhesive quaternary ammonium polymer compositions, use of them in bonding flexible covering to rigid substrate, and laminated articles produced therewith.**

(57) An adhesive composition comprising either (i) a latex polymer having a Tg from −10°C to 25°C or (ii) a mixture of soft latex polymer and hard latex polymer, each polymer being either

(1) a copolymer of quaternary monomer prepared by reacting an epihalohydrin of the formula $XCH_2\text{-}\underline{CHCH_2O}$ with a salt of an amine of the formula $RN(R')CH_3$, or

(2) A reaction product of a copolymer of such an amine salt and such an epihalohydrin;

wherein

R is an ethylenically unsaturated organic group,

R′ is a linear ($C_1$ to $C_4$)-alkyl group, optionally hydroxy-substituted,

X is chlorine, bromine or iodine.

The compositions are useful in bonding a flexible covering layer, such as fabric covered polyurethane foam, to a rigid substrate such as glass fibre mat to produce laminates including automotive headliners and acoustic panels.

EP 0 072 684 A1

# ADHESIVE QUATERNARY AMMONIUM POLYMER COMPOSITIONS, USE OF THEM IN BONDING FLEXIBLE COVERING TO RIGID SUBSTRATE, AND LAMINATED ARTICLES PRODUCED THEREWITH.

This invention is concerned with adhesive quaternary ammonium polymer compositions, use of them in bonding a flexible covering to rigid substrate, and laminated articles produced therewith.

This invention is more specifically concerned with water borne adhesive compositions useful in bonding two substrates to form a laminate, such as bonding a decorative or protective covering layer to a rigid mat. Of particular importance is the multilayer laminate produced by bonding a fabric covered polyurethane foam to a resin-impregnated glass fiber mat, the adhesive composition being interspersed between the urethane layer and the mat, thus forming a fabric-foam-adhesive-mat laminate. The laminate is a structural unit having many uses, for example, as automotive headliners and acoustic panels. Such laminates should have suitable ease of fabrication and installation, strucutural strength, dimensional stability, acoustic properties, decorative appearance, fire resistance, toughness, soil resistance and thermal stability. More generally, the requirements comprise stability to the various environmental stresses encountered in the given application as well as the stresses encountered in fabrication and installation in the given application.

Difficulty has been encountered in producing such laminates with a thoroughly satisfactory appearance, particularly for use as automotive headliners employing glass fibre mat substrates. Because of the curved surfaces present in the automobile headliner, the face material must comply smoothly with a non-planar surface and not show a tendency to detach from the surface. While complying with the curves of the

surface, however, it must not comply so well as to follow the minor grooves and other irregularities commonly found in the surface of the glass mats. The adhesive must cure or develop its high strength at temperatures well below temperatures which may be harmful to the materials being laminated, particularly in the case of temperature sensitive foams, while resisting stresses during fabrication as well as long term stress.

An object of this invention is to provide an adhesive and a method of adhering an attractive surfacing sheet to a main rigid body substrate for use as an automotive headliner which may be fabricated and installed expeditiously. The adhesive should be easily sprayed in the spray equipment commonly used in the industry, be fast drying for high speed production, exhibit excellent adhesion to both substrates, bond well to a wrinkled or irregular rigid substrate without the wrinkles or minor irregularities showing in a flexible, decorative top layer in the laminate, exhibit suitable heat and humidity resistance as required in the specific application, and work well in general under a wide enough variety of processing conditions so that extreme care in processing is not needed in either preparation of the laminate or in fabrication of the finished product comprising the laminate.

The invention includes within its scope an adhesive composition useful in bonding a sheet material to a rigid substrate to produce a laminate, use of the composition as an adhesive to produce a laminate and laminate produced by this process.

According to this invention there is provided an adhesive composition comprising either (i) a latex polymer having a Tg from $-10^{o}C$ to $25^{o}C$ or (ii) a mixture of soft latex polymer and hard latex polymer,

each polymer being either

(1) a copolymer of quaternary monomer prepared by reacting an epihalohydrin of the formula $XCH_2-CHCH_2O$ with a salt of an amine of the formula $RN(R')CH_3$, or

(2) A reaction product of a copolymer of such an amine salt and such an epihalohydrin;

wherein R is an ethylenically unsaturated organic group,

R' is a linear ($C_1$ to $C_4$)-alkyl group, optionally hydroxy-substituted, and

X is chlorine, bromine or iodine.

Polymers/useful according to this invention are described in U.S. Patent Nos. 3,678,098 and 3,694,393 and European Patent applications 82304031.6, 82304032.4 and 82304030.8.

The polymer component of the adhesive compositions are:

Group 1. One or more copolymers of a quaternary monomer prepared by reacting an epihalohydrin of the formula $XCH_2-CHCH_2O$ with an amine salt of the formula (V) $RN(R')CH_3.HY$ and/or

Group 2. The reaction product of copolymers of the foregoing amine salt and the epihalohydrin.

Quaternary ammonium monomers useful in preparing polymers (1) of this invention have the formula:

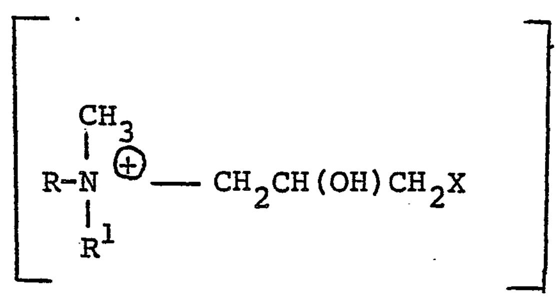

$Y^{\ominus}$ (I)

or

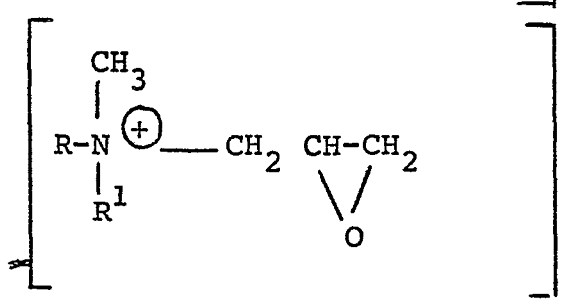

$Y^{\ominus}$ (IV)

wherein

R is an ethylenically unsaturated organic group

$R^1$ is a linear($C_1$ to $C_4$)alkyl group, optionally hydroxy-substituted

X is chlorine, bromine or iodine, and

$Y^{\ominus}$ is an anion.

The polymers of group (2) are made from other monomers, as described below, but have the same compositions as the polymers of group 1.

One preference of $Y^{\ominus}$ is an anion which promotes water solubility of the salt. Examples of suitable anions include the halogen ions of halogen acids, or the anion of any other acid, such as nitrate, phosphate, acid phosphate, sulfate, bisulfate, methyl sulfate, carboxylate, sulfonate, sulfanate, acetate, formate, oxalate, acrylate, and alpha-methacryloxyacetate. Preferably, $Y^{\ominus}$ is the anion of an acid having an ionization constant ($pK_a$) of 5.0 or less, i.e., a dissociation such that the hydrogen ion concentration is at least $10^{-5}$. $Y^{\ominus}$ may alternatively be a surfactant anion, such as lauryl sulfate, dodecylbenzene sulfonate and dibutyl sulfosuccinate.

In a preferred embodiment (a) the ethylenically unsaturated organic group R is: $CH_2=C(R^4)-C(O)Z-A$

wherein

$R^4$ is hydrogen or methyl,

Z is oxygen or $-NR^5-$

wherein

$R^5$ is hydrogen or hydrocarbyl having up to about 10 carbons, preferably hydrogen or methyl, and

A is a ($C_2$-$C_4$) alkylene group having at least two carbon atoms in a chain between the adjoined Z and $N^+$ or A may be a polyoxyalkylene group of the formula

$$-(CH_2CH_2O)_xCH_2CH_2-$$

wherein

x is 1 to 11 or more.

In a further preferred embodiment (b), R is the structure

$$R^3-CH_2-(CHR^2)_n-CH_2-$$

wherein

n is 0 or 1

$R^2$ is H or OH, and

$R^3$ is an alkenoxy group containing an allyl group or a carbalkenoxy group containing a double bond functionally equivalent to an isolated vinyl group.

In preferred embodiment (c), R is the structure

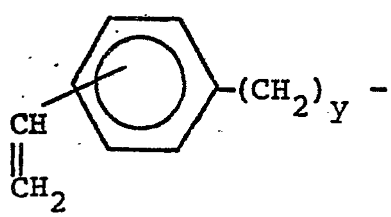

wherein

y is an integer from 1 to 4.

Throughout this disclosure, this structure will also be referred to as an "arvinylphenylenylalkylenyl" group.

Monomers (IV) and the corresponding polymers are prepared, desirably from monomers (I) and the corresponding polymers, as described hereinbelow.

A detailed description of the cation portion of those monomers of embodiment (a) wherein Z is oxygen, is given in United States Patents 3,678,098 and 3,702,799. In this formula, the ethylenically unsaturated group is linked to the rest of the molecule by an ester linkage and A is preferably ethylenyl. When Z is $-NR^5-$, the linkage is by means of an amide group and A is preferably ethyleneyl or propylenyl. In this embodiment, (a), preferred

R groups are alpha, beta-ethylenically unsaturated monovalent groups such as substituted $C_1$-$C_4$ alkyl acrylates or methacrylates and the corresponding substituted N-alkyl acrylamides and methacrylamides.

Preferred embodiment (b) includes monomers having an anion and a quaternary ammonium cation described in European Patent Application No. 82304032.4. Preferred embodiment (c) includes quaternary ammonium monomers having an anion and a quaternary ammonium cation described in European patent application No. 82304031.6.

Each of the monomers preferably copolymerize with monomer(s) having similar relative reactivity ratios as taught by C. Walling in Free Radicals in Solution, John Wiley, 1957, Chapter 4, and Brandrup and Immergut et al., Polymer Handbook, John Wiley, 1975, Section II, n.b. pages 249-257.

One process for the reaction of the epihalohydrin and the amine salt to produce monomer (I) employs anions, other than surfactant anions, and may be effected at room temperature to about 80°C. Generally, the procedure should be controlled to prevent the temperature exceeding about 80°C., preferably avoiding temperatures above 50°C. The reaction is most conveniently carried out in aqueous media, preferably water itself. The starting salts and the epihalohydrin are adequately water-soluble to make water entirely suitable as the reaction medium. The epihalohydrin is preferably used in stoichiometric amount or in excess thereof. The aqueous medium may contain an auxiliary water miscible solvent when R comprises an alkylene group of 4 or more carbon atoms. No catalyst may be needed for the reaction. It is, however, essential that the pH be maintained on the acid side during the reaction to prevent undesirable side reactions. The reaction is rapid even when ______________________________

started at room temperature. Its completion can be readily determined by following the drop in amine titre as the amine group is quaternized. Generally, the addition of epihalohydrin to the aqueous starting salt solution is made at as rapid a rate as is consistent with the control of the temperature in the reaction system. The monomer wherein $Y^{\ominus}$ is a surfactant anion is then prepared by an anion exchange process. The monomers can be copolymerized with each other and copolymerized with other ethylenically unsaturated monomers as taught in U.S. Patent 3,678,098, column 2, line 54, to column 3, line 66.

Any ethylenically unsaturated monomer having a group

$$H_2C=C<$$

including other quaternary ammonium monomers, may be used for copolymerisation with the monomers of formulae I and IV under conditions such that the polymerization medium is maintained at an acid condition, preferably at a pH of 4 to 7. Examples of preferable monoethylenically unsaturated monomers having a single

$$H_2C=C<$$

group include vinyl esters of $(C_1-C_{18})$ aliphatic acids, such as vinyl acetate, laureate, and stearate, esters of acrylic acid or methacrylic acid with $(C_1-C_{18})$ alcohols, including $(C_1-C_{18})$ alkanols, benzyl alcohol, cyclohexyl alcohol, and isobornyl alcohol, such as methyl acrylate or methacrylate, ethyl acrylate or methacrylate, butyl acrylate or methacrylate, or 2-ethylhexyl acrylate or methacrylate, octadecyl acrylate or methacrylate, vinyl aromatic hydrocarbons (e.g., styrene, α-methyl styrene, vinyl toluene

and various dialkyl styrenes); acrylonitrile, methacrylonitrile, ethacrylonitrile, and phenylacrylonitrile; acrylamide, methacrylamide, ethacrylamide, N-methylol acrylamide,

N-monoalkyl and -dialkylacrylamides and methacrylamides, e.g., N-monoethyl, -ethyl, -propyl, butyl, and N-dimethyl, -ethyl, -propyl, -butyl, etc., arylacrylamides, e.g., N-monophenyl-, and diphenyl-acrylamides and methacrylamides, alkarylacrylamides and methacrylamides, vinyl ethers, such as butyl vinyl ether; N-vinylactams such as N-vinyl pyrrolidone, and olefins, such as ethylene, fluorinated vinyl compounds, such as vinylidene fluoride, hydroxyethyl acrylate or methacrylate or any of the hydroxyl-containing or amine-containing monomers, monomers mentioned in column 2 and 3 of U.S. Patent No. 3,150,112; vinyl chloride and vinylidene chloride, alkyl vinyl ketones; e.g., methyl vinyl ketone, ethyl vinyl ketone and methyl isopropenyl ketone, itaconic diesters containing a single

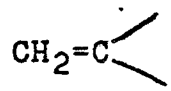

grouping, e.g. the dimethyl, diethyl, dipropyl, dibutyl and other saturated aliphatic monohydric alcohol diesters of itaconic acid, diphenyl itaconate, dibenzyl itaconate, di(phenylethyl) itaconate, allyl and methallyl esters of saturated aliphatic monocarboxylic acid, e.g. allyl and methallyl acetates, allyl and methylallyl propionates, allyl and methallyl valerates, vinyl thiophene, 4-vinylpyridine, and vinyl pyrrole.

In identifying suitable vinyl systems for reaction with the quaternary ammonium monomers care should be paid to the reactivity ratios of the monomers and/or to the Q and e values determined in accordance with the Alfrey-Price Q-e scheme as explained in Free Radicals in Solution and the Polymer Handbook. Utilizing this type of information a proper choice of embodiment of this invention can be made from its expected reactivity ratios, $r^1$ and $r^2$, and those of the vinyl monomer. It is preferred that the relative reactivity ratios of the quaternary monomer and the comonomers should differ by no more than a power of 10 and neither should be 0. Clearly the Q and e values of the quaternary ammonium monomer should be similar to those of the vinyl monomers used to form a copolymer.

Monomers I and IV are polymerizable and for this their aqueous solutions may be used directly. Any known polymerization initiator of free radical type effective in aqueous systems can be used. Examples are t-butyl hydroperoxide, ammonium persulfate, and alkali metal persulfates, such as those of sodium or potassium. They are used at the customary dosage of 0.1 to 2 percent by weight, based on monomer weight. They may be used with sodium hydrosulfite or other reducing agents in redox systems. Instead, the polymerization may be effected by radiation.

The quaternary ammonium monomer units preferably comprise up to about 10% of the polymer by weight with 1 to 5% being more preferred.

The quaternary ammonium salt monomers may be copolymerized with other polymerizable ethylenically unsaturated monomers, especially by polymerization procedures, using the initiator or redox systems just mentioned in conjunction, if desired, with suitable emulsifiers, of anionic, nonionic or cationic type. The following compounds may be used as emulsifiers: t-octyl, or t-nonyl-phenoxypolyethoxy-ethanols having from about 10 to 50 or more oxyethylene groups, octadecylamine sulfate, cyclohexyldiethyl (dodecyl) amine sulfate, octadecyltrimethylammonium bromide, polyalkoxyamines or mixtures of two or more such emulsifiers.

Molecular weight is controlled by the temperature of the polymerization, the amount of initiator, both well known in the art, and the use of chain transfer agents as in U.S. Patent 3,020,178 columns 2 and 3 and U.S. Patent 4,243,430 columns 5 and 6. The desired particle size is achieved by following the teachings in U.S. patents 2,520,595 and 3,383,346 and British Patent 1,120,410. Glass transition temperature ($T_g$) is controlled via the composition of the copolymer. $T_g$ is a conventional criterion of polymer hardness and is described by Flory in Principles of Polymer Chemistry, Cornell University Press (1953) pages 56 and 57 and in Polymer Handbook, Bandrup and Immergut, Eds., Interscience (1966) §III. $T_g$ may be measured or it may be calculated as described by Fox in Bull. Am. Physics Soc. 1,3 page 123 (1956) or by the use of the Rohm and Haas ACRYLIC GLASS TEMPERATURE ANALYZER, publication No. CM-24L/CB, Rohm and Haas Company, Philadelphia, PA 19105. The group (2) polymers are an alternative method of preparing the polymers of the present invention by reacting an epihalohydrin with a polymer containing from 0.25 to 100 percent by weight of an amine salt of formula (V) supra. Such polymers

may be obtained by polymerizing the amine salt of formula (V) directly or by polymerizing the corresponding amine in free base form and then neutralizing it with a hydrogen acid to form the salt of the amine polymer.

Numerous methods of polymerizing, which term is used herein to include copolymerizing, the amine salts of formula (V) and the corresponding amines in free base form are well known and any of these methods may be used. Conventional emulsion or suspension polymerization techniques may be employed. Any of the comonomers listed above for copolymerization with the quaternary ammonium compound of formula I may be used as comonomers with the amine salts of formula (V) or the corresponding amine in free base form. Details of the alternative preparation are found in U.S. Patent 3,678,098 column 4, lines 33 to column 5 line 20 and include the process for activation of a polymer of monomer units corresponding to formula (I), to those corresponding to the formula (IV). The activation process is applicable to polymers of either group (1) or group (2) having the monomer units corresponding to formula (I).

A particularly preferred adhesive composition of this invention is a blend of a latex of soft polymer of embodiment (A) and a latex of hard polymer of the same embodiment formulated to an appropriate viscosity with a minor amount, such as 0.1 to 5%, on polymer solids, preferably 0.5 to 2%, of a thickener and optionally a small amount such as up to 2%, preferably up to a 0.5%, of a pigment. Preferred soft polymers are those having a glass transition temperature below $10^{O}C$. and preferred hard polymers are those having a glass transition temperature above $10^{O}C$. Preferably the soft polymer has a glass transition temperature between $10^{O}C$ and $-50^{O}C$., 0 to $-40^{O}C$. being preferred. The hard polymer preferably has a $T_g$ between $10^{O}C$. and $80^{O}C$. with $20^{0}C$. to $40^{0}C$. being preferred. The ratio of the hard polymer to soft polymer may be from 9:1 to 1:9 with 8:2 to 5:5 being preferred. The soft polymer preferably has

a larger particle size than the hard polymer; the soft polymer preferably being between 0.1 and 0.5 microns in diameter with 0.2 to 0.4 being preferred and the hard polymer being preferably 0.05 to 0.3 microns in diameter with 0.1 to 0.2 being preferred. The hard and soft polymers may of course each contain more than one individual polymer component.

In the embodiment employing a polymer latex (which may consist of a single polymer) with $T_g$ from about -10$^oC$. to about 25$^oC$., the preferred particle size is the same as that of the soft polymer of a blend, as given above.

The compositions of the present invention surprisingly are general purpose laminating adhesives particularly adapted to adhere a flexible coating or covering layer to a relatively rigid or inflexible supporting layer or mat. They may of course also contain any other components generally useful in adhesive formulations, as known to the skilled man. These adhesive compositions are particularly useful in the preparation of laminates for use as automotive headliners and acoustic panels. The comparatively rigid layer may be formed to the contour required for installation and is formed of material which is relatively light in weight, easily molded and stiff enough to hold its shape. Suitable materials are foam plastics, such as polystyrene, urethane and polypropylene, and glass fiber mats such as those described in U.S. Patent 3,620,906. The flexible decorative cover layer may be a single layer or a composite and often is a composite of a soft plastic material such as a polyester urethane foam or a foamed synthetic rubber latex. Such foam is normally covered with a decorative cover layer such as a cloth or decorative plastic layer. A typical polyurethane foam so employed is an 1/8" thick layer of Curon 805 manufactured by The Curon Division of Reeves Brothers. Other thin polyurethane foams suitable for this application are manufactured by Tenneco and by Scott Paper Company. A typical decorative fabric for use as the face layer is a nylon warp knit fabric preferably of brushed nylon typified by the 4 ounces per square yard material manufactured by the Automotive Division, Collins and Aikman, Albemarle, North Carolina. It is common practice in the industry for the nylon fabric to be flame laminated to the soft flexible foam which is then to be applied to the rigid substrate. A fibreglass substrate may be composed of several layers of glass fibre mats impregnated with a thermo-setting resin comprising 7 to 30% by weight of the mat. The mass of fibres is molded and cured into an appropriately shaped shell in which the thickness of the web may vary from about 3 in. to about 1/8 of an inch.

The adhesive compositions of the present invention may be involved in three of the steps in the preparation of a laminate: (1) spraying the adhesive composition onto the rigid substrate, (2) drying the adhesive and (3) bonding the adhesive. In the making of headliners the shell is transported to a spray booth, such as by a continuous conveyor, where the appropriate face is sprayed with the adhesive preferably using automatic shut-off spray guns. The sprayed shell is then conveyed to a drying oven for drying. A preferred drying temperature is 180 to 210$^{O}$F. in a continuous through-put or "tunnel oven" where the residence time is typically 90 to 120 seconds. This time may vary depending on the efficiency of the oven, the weight of adhesive applied and so forth. This drying step is normally not a slow step or rate determining step in the operation if an aqueous emulsion system is used at high solids, such as above 45%, preferably above 50% or even above 55%. The next step is a step in which soft decorative material is applied to the adhesive on the rigid substrate. This step may be performed immediately after the removal of the panel from the drying oven or the panels may be stored for later use.

One of the unexpected advantages of the adhesive compositions of this invention is that the panel having the dried adhesive on its surface need not be used immediately but can be stored for a protracted period and then used. This has the advantage that a shut down in equipment at the spray booth, the oven or the bonding press need not lead to shut-down of the entire line. A further advantage is that adhesive coated panels may be inventoried and the bonding completed in response to orders for a special decorative laminate which ordinarily would not be kept in stock.

Bonding, of either inventoried adhesive coated shells or shells presented in a continuous process, usually involves pre-heating the adhesive layer, applying the decorative layer and pressing the assembly in a heated press. The pre-heat may be by means of infrared lamps to bring the adhesive layer to a temperature which may be as high as 400 to 450°F. The panel is then transferred to the press where the decorative layer, such as the foam fabric layer, is applied to the adhesive, foam faced down, and the press closed. The temperature of the press platen is limited by the distortion temperature or the degradation temperature of the components. In the case of the urethane foam employed in the examples below, the press temperature is limited to 290°F. for both platens. The press is closed with a pressure normally being 1 to 20 lbs. /sq.in. and it is held for 3 to 5 seconds. One press platen may have an inflatable rubber face to provide a uniform loading of the material being laminated. The time in the press defines "the cycle time" and is normally the slow step in the process. Thus the production rate depends on the residence time in the press and the 3 to 5 second time for the adhesive composition of this invention represents a beneficial saving over materials previously used. Previous materials such as polyethylene films or polyester scrims required press times of the order of 20 to 30 seconds, and were accordingly less efficient.

Several of the surprising performance features of the adhesive composition are critical with regard to the fabricating process or the properties of the laminate produced. Particularly important are the sprayability of the adhesive composition, the drying rate of the adhesive composition after it is

sprayed, the adhesive bond strength, the ability to form a strong bond without showing imperfections on the rigid substrate in the decorative face, heat and humidity resistance of the bond and latitude for error in the fabricating steps.

The adhesive formulation of the present invention must be shear thinning because on the panel the viscosity must be high, to prevent penetration of the adhesive into the substrate and thus its loss from the bonding surfaces; under spraying conditions (that is at high shear rate) the apparent viscosity may be low permitting high through-put through the spray gun. Additionally the adhesive composition should be stable at high shear rates so that the nozzles do not clog in the spray guns.

As noted above, rapid drying in the drying oven is one of the desirable features of the adhesive composition of the instant invention. This feature is made possible by the production of the polymer latexes of the present invention at high solids contents. An additional feature of these polymer latexes, which contributes to the rapid drying, is that these polymers release the water from the latex at an unusually high rate, particularly the last traces of water. One surprising advantage of these latexes is that they may be dried in ovens designed for drying solvent-based adhesives despite the very high heat of vaporization of water.

Adhesion of the adhesive to the glass mat is excellent by virtue of the control of penetration of the adhesive composition into the mat, particularly by means of control of the viscosity of the adhesive as sprayed. This viscosity control permits a very limited degree of penetration of the mat to assure high adhesion without impoverishment of the boundary

layer. Adhesion to the polyurethane and to other surfaces is perhaps more critical if the surfaces are not somewhat permeable. The cationic and chemically reactive nature of the polymers comprising quaternary ammonium monomers useful in the present invention is believed to lead to the good bond formed with polyurethane and other surfaces.

Although we are not to be bound by any theoretical consideration we speculate that the ability to form a strong bond with the flexible decorative coating, at low bond press pressures and short cycle times at comparatively low temperatures, is due to the combination of high low-shear viscosity and formulation with an appropriate amount of hard and soft polymers. As noted in the examples below, soft materials tend to have the wrinkled appearance of the substrate come through to the decorative surface, presumably because the tension of the adhesive pulls the surface coat into the imperfections of the rigid substrate. When the adhesive composition is formulated with too hard a polymer then good bonding is not achieved under the low pressure, low temperature and short cycle time conditions.

Interior parts in automobiles are expected to withstand temperatures as high as $180^{O}F$. and, in separate tests, $100^{O}F$. at 100% relative humidity, both for protracted periods such as two hours or more. The polymers used in the present invention lead to improved performance in these tests which may be due to some crosslinking during fabrication and possibly further crosslinking during the testing.

Advantages over prior art materials are noted in a number of processing latitude situations. The cycle time in the press being so low there is little tendency to rush the pressing which in the prior art

materials would lead to very poor bonding. Even though the cycle time is very short when employing adhesive compositions according to the invention, if the material does not quite reach the required temperature or if the press temperature is a little low the bond is still found to be satisfactory (that is a failure is still observed to be a cohesive failure in the fibreglass or foam). Hot strength of the adhesives are good whereas many of the prior art materials have marginal hot strength. The slight penetration of glass fibre mats by this adhesive reinforces the critical surface region of the mat. This reinforcement did not occur with prior art materials and resulted in occasional failures which appeared to be mixed adhesive-cohesive failures at the fibreglass surface. Compared to separate scrim or film forms of adhesives, which are laid onto the glass fibre prior to bonding in the press, the sprayed-on adhesive according to this invention offers processing advantages by allowing/a pre-heating step. The scrim or film not being secured to the glass before the bond step means that it would not adhere to the rigid substrate during a trip on the conveyor such as through a heating station.

In the examples given below average particle sizes are given as average diameters measured by the Coulter Nano-Sizer, made by Coulter Electronics Ltd., Cold Harbour Lane, Harpenden, Herfortshire, AL54UN, England, following the directions in the January 1980 Operating Manual for the instrument. The measurement is also described in "Lines, R.W. et al in Powder Technology 1979, volume 24, issue 1 page 91 ff. Measured values of $T_g$ are obtained by a scanning calorimeter.

The soft polymer component helps provide tack or quick grab properties which aid in applying the soft decorative coat to the rigid shell. The hard polymer component helps to decrease the penetration of the adhesive into both porous surfaces during the bonding in the press. The high viscosity of the adhesive composition is particularly effective in decreasing the wicking into the glass mat which has regions differing in porosity because of the sound absorbing design requirements. These may be regions where the glass is under compression and thus of lower porosity than average and regions where the glass was subjected to tension and thus of higher porosity.

The following examples are for illustrative purposes only. All parts and percentages are temperatures degrees celcius unless otherwise

Example 1

a) Preparation of Quaternary Monomer

A flask equipped for stirring, automatic temperature control, addition, and vacuum distillation is charged with 470 grams of deionized water and 89.4 grams of concentrated (70%) nitric acid. A supply of dimethylaminoethyl methacrylate (168.8 grams) is gradually added and the temperature maintained at less than 35°C. Epichlorohydrin (92.5 grams) is added all at once and the temperature is maintained at 50°C. for 3 hours. Finally, at 50-100 mm Hg and 50°C., 43 grams of water containing unreacted epichlorohydrin is distilled off, the pH of the batch is adjusted to 5.0 with nitric acid and the solids to 33% with water.

b) Preparation of Polymer Emulsion

A flask equipped for stirring, cooling, addition and condensing is charged with 666 g. deionized water. The water is heated to 60°C. under $N_2$ sparge, a solution of 0.1g. $FeSO_4$, $7H_2O$ in 3 g. deionized water and a solution of 0.28g. Versene Fe3 in 4g. deionized water is added. A monomer emulsion of 400 g. deionized water, 129.6 g. of a 70% solution of t-octylphenoxypoly(39) ethoxy ethanol (OPE40) surfactant, 2307 g. ethyl acrylate (EA) and 286.8 g. of the quaternary monomer solution of a) above at 33% solids and separately 16.7 g. of a 50% solution of diisopropylbenzene hydroperoxide are added, under nitrogen, over a period of 3 hours. Concurrently a solution of 4.66 g. of Formopon (sodium sulfoxylate formaldehyde) in 166.5 g. deionized water is added while maintaining the temperature at 60°C.

Residual monomer is removed using a free radical chaser. This latex is Latex A.

The polymer latex particles of Latex A have an average diameter of 0.3 microns. A sample of polymer prepared by drying the latex, has a glass transition temperature ($T_g$) of - 14°C. The polymer has a monomer unit composition corresponding to 97 weight percent ethyl acrylate and 3 weight percent of the quaternary monomer product of a) above.

Employing a redox emulsion polymerization, as in b) above but with a kettle charge monomer, latex B is prepared having the composition, in percent by weight, 47 EA, 50 MMA (methyl methacrylate), 3 quaternary monomer of a) above, and having an average latex particle diameter of 0.15 microns and a $T_g$ of 30°C.

c) Preparation of Hard Polymer Emulsion

Using the Fox equation, $W(A)/T_g(A) + W(B)/T_g(B) = 1/T_g(AB)$, where W is the weight fraction of the component given in parenthesis, and $T_g$ is expressed in degrees Kelvin the average $T_g$ of blends of the latex polymers, $T_g(AB)$, may be computed. The results of such a computation for blends of latex polymers A and B above, with $T_g$ values reconverted to celsius, are:

| | | | |
|---|---|---|---|
| Weight ratio B/A | 85/15 | 70/30 | 50/50 |
| Average $T_g$ | 23°C | 15°C | 6°C |

Example 2

2A. A fabric/foam/fiberglass laminate adhesive is formulated to have a viscosity of 35,000 cps. (measured with a Brookfield Viscometer Model RVF using a no. 6 spindle at 10 rpm) as follows (parts by weight):

| | |
|---|---|
| Latex B | 70 |
| Latex A | 30 |
| Cellosize QP4400 | 0.57 |
| Water | 3.3 |
| Aqua Hue Blue Pigment (14% solids) | 0.1 |
| Water | 0.2 |

This adhesive is sprayed (using 50 psi in a model 62 Binks gun fitted with no. 66 fluid nozzle and a 66 PE atomizer air cap) on a 3" x 4" piece of phenolic resin bonded fiberglass substrate of a density of 2.14 g/in$^3$. The adhesive sprays well with no signs of instability such as nozzle-clogging. The adhesive is dried 4 minutes at 180$^{\circ}$F.; 8 gm/ft$^2$ dry material is applied.

The dried, adhesive coated substrate is heated for five minutes in a hot air oven at 290$^{\circ}$F. A five inch long one inch wide strip of 1/8" thick polyurethane foam-fabric laminate, foam face down, (Curon 805, Neeves Bros., Inc., Corneliue, N.C.) is laid on the hot adhesive surface and pressed for 10 seconds with a two kilogram weight distributed over a 1" x 2" area. The sample is cooled to room temperature, is observed to be free of wrinkles on the fabric face and is tested as follows:

a) The unattached end of the one inch polyurethane laminate is doubled back and pulled in

a 180° peel test. At room temperature the polyurethane foam tears; no adhesive failure in seen and no wrinkles develop.

b) A second sample is placed in an oven at 180°F for four hours then the one inch strip is pulled at 180° angle while the sample is still at 180°F. Again the foam tears, there is no adhesive failure and no wrinkling.

c) A third sample is placed in a chamber held at 100°F and 100% RH for 17 hours. The end of the foam laminate strip is pulled and again the foam tears, the adhesive does not fail and no wrinkles develop.

It is concluded that the adhesive is stronger than the foam over a wide range of environmental conditions.

2B. Samples are made and tested as in Example 2A except that adhesive is thickened to 15,000 cps by reducing the Cellosize QP4400 thickener level to 0.35 pts/100 pts. latex. The adhesive composition sprays well, no wrinkling of the nylon fabric is seen and the adhesive is stronger than the foam in all three tests.

2C. Samples are made and tested as in Example 2A except that the fiberglass substrate has a density of 0.85 $g/in^3$. The adhesive composition sprays well, no wrinkling of the nylon fabric is seen and the adhesive is stronger than the foam in all three tests.

2D. Samples are made and tested as shown in Example 2A except that the dried, adhesive coated fiberglass substrate is preheated to 270°F. before the polyurethane foam is pressed onto it. The adhesive composition sprays well, no wrinkling of the nylon fabric is seen and the adhesive is stronger than the foam in all three tests.

Example 3 - Other Latex Systems

3A. Using the thickener and pigment, i.e., the other components of the formulation of Example 2A, the blend is changed to 85/15 Latex B/Latex A. The adhesive formulation is applied and tested as in Example 2A. It is found that the bond formed between the polyurethane foam and the fiberglass is not as strong as that formed by the 70/30 ratio. Raising the oven temperature above 290°F. and increasing the press time above 10 seconds is successful in producing an acceptable product. However, the 300 to 350°F. temperature range is marginal in regard to a deleterious effect on the fabric and foam which is worse the higher the temperature and time. This limit, concerning performance of this blend, is peculiar to layers which degrade at high temperatures. The adhesive mixture does not show signs of any degradation under test conditions which include 30 seconds to 2 minutes at the elevated temperature. No wrinkling of the nylon fabric is observed.

3B. Example 2A is repeated but employing 100 parts of latex B and none of Latex A. It is found that little if any bond is established between the polyurethane foam and the fiberglass substrate.

3C. Employing the formulation and procedures of Example 2A, except that the 70/30 ratio is changed to 50 parts of each of the two latexes, results in excellent bond strengths. However, some wrinkling is observed on the nylon fabric on particularly severely wrinkled fiberglass board. With a less wrinkled board this composition is satisfactory.

3D. Using the formulation and procedures of Example 2A, except that 100 parts of Latex A and no Latex B is employed, the bonding procedure is modified by applying the foam fabric laminate to the dry adhesive coated fiberglass mat substrate at room temperature and 5 psi; that is 10 lbs. over

the 1" by 2" area. The resultant laminate is well bonded but severe wrinkling is evident on the nylon face. Reducing the pressure, under which the bond is formed, to 1 psi results in a weak bond. Replacing Latex A by a polymer using butyl acrylate in place of ethyl acrylate gives a good bond at 1 psi but wrinkling.

3E. Following the procedure of Example 1b a polymer is prepared from 50 parts by weight of butyl acrylate, 46 of styrene, 2 of the quaternary monomer of Example 1a and 2 of the monomer prepared by treatment of the Example 1a monomer with caustic to give a monomer having the formula (IV) above. The polymer particles in the latex have an average particle diameter of about 0.3 microns. This polymer is used at the sole latex in formulating an adhesive as in Example 2A and is tested. The resulting bond is excellent and the fabric is not wrinkled.

3F. Using the procedure of Example 1a a quaternary ammonium monomer is prepared by adding epibromohydrin to pvinyl-N,N-dimethyl-benzylamine. 5 parts of the resulting monomer are reacted with 95 parts by weight of vinyl acetate producing a copolymer which is formulated into an adhesive by substituting 70 parts of it for the 70 parts of latex B in Ex. 2A. The adhesive forms an excellent bond between the urethane layer and the fiberglass layer in the laminate and the laminate shows no signs of surface wrinkling.

3G. A copolymer is prepared having a particle diameter of 0.3 microns and a composition 40 parts styrene, 56 parts butyl acrylate and 4 parts of the quaternary monomer of Example 1a. This is substituted for the latex A in the formulation of Example 2A and tested as described therein. Both excellent adhesion and freedom from wrinkling are observed.

3H. Epichlorohydrin is added to dimethylaminopropyl methacrylamide by the process of Example 1a above and then 2 parts by weight are copolymerized with 83 parts of ethyl acrylate and 15 parts acrylonitrile. The latex is used alone unthickened and tested as in Example 2A, except that expanded polystyrene is used as the hard substrate, the temperature used in 180°F. the pressure is 30 psi.

An excellent bond is formed and there is no evidence of surface wrinkling of the decorative layer.

Example 4 - Adhesive Formulation Rheology

The formulated adhesive exhibits markedly shear thinning rheology as seen in the following table. As noted above this rheology contributes both to the ease of spraying of the adhesive and the ability to hide imperfections in a substrate.

ADHESIVE FORMULATION RHEOLOGY

Brookfield Model RVT (spindle 2, 10 rpm)

| Shear rate ($Sec.^{-1}$) | 2.5 | 5.0 | 10.25 | 25 |
|---|---|---|---|---|
| 1. Apparent viscosity (cps) | 16,000 | 9,800 | 5,100 | 3,250 |
| 2. Apparent Viscosity (cps) | 11,500 | 7,000 | 3,800 | 2,350 |

Notes:

1. Adhesive formulated as in Example 2, part 1 but with different amounts of thickener (Cellosize) to furnish two samples for testing.
2. The data indicate that the formulated adhesives obey the equation for power law fluids:

$$\text{Apparent Viscosity} = K(\text{shear rate})^{n-1}$$

Where K is a fluid constant for the given fluid; n is the power law index.

The value of n is found to be 0.3 from the data in the table.

Claims

1. An adhesive composition comprising either (i) a latex polymer having a Tg from -10°C to 25°C or (ii) a mixture of soft latex polymer and hard latex polymer, each polymer being either

(1) a copolymer of quaternary monomer prepared by reacting an epihalohydrin of the formula $XCH_2-CHCH_2O$ with a salt of an amine of the formula $RN(R')CH_3$, or

(2) a reaction product of a copolymer of such an amine salt and such an epihalohydrin;

wherein R is an ethylenically unsaturated organic group,
R' is a linear ($C_1$ to $C_4$)-alkyl group, optionally hydroxy-substituted, and
X is chlorine, bromine or iodine.

2. A composition as claimed in claim 1 wherein the composition comprises mixture (ii) and the Tg of the soft polymer(s) is below 10°C and the Tg of the hard polymers is above 10°C.

3. A composition as claimed in claim 1 or 2 additionally comprising a thickener and optionally a pigment.

4. An adhesive composition according to any preceding claim also containing one or more components known to be useful in adhesive compositions.

5. The use of a composition according to any preceding claim as an adhesive.

6. Use according to claim 5 for bonding a flexible covering layer to a rigid substrate.

7. Use according to claim 6 wherein the substrate comprises a glass fibre mat.

8. Use according to claim 7 wherein the flexible layer comprises fabric covered polyurethane foam.

9. Laminate produced by a process according to any of claims 6 to 8.

10. Automotive headliner or acoustic panel comprising flexible covering layer bonded to rigid substrate by adhesive composition according to any of claims 1 to 4.

European Patent Office

# EUROPEAN SEARCH REPORT

0072684
Application number

EP 82304291.6

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int. Cl. 3) |
| D,X | US - A - 3 678 098 (S.N. LEWIS)<br>* Column 5, line 73 - column 6, line 9; examples 4,5, 11; claims 1,8,9 *<br>-- | 1 | C 09 J 3/14<br>C 08 J 5/04<br>C 08 J 5/12<br>B 32 B 5/18<br>B 32 B 17/04<br>B 60 R 13/02 |
| A | GB - A - 1 495 241 (MITSUBISHI CHEMICAL INDUSTRIES)<br>* Page 1, line 62 - page 2, line 68 *<br>-- | 1 | |
| A | US - A - 3 291 679 (J.P. O'BRIEN)<br>* Claim 1; column 7, lines 4-27 *<br>-- | 1 | |
| A | DE - A1 -2 655 090 (CHEMISCHE FABRIK KALK)<br>* Claims 1,3,4 *<br>-- | 6-9 | TECHNICAL FIELDS SEARCHED (Int. Cl. 3) |
| A | DE - A1 - 2 831 640 (DLW AG)<br>* Claims 1,2,6,7 *<br>-- | 10 | C 09 J<br>C 08 J<br>B 32 B<br>B 60 R<br>C 08 L 33/00<br>C 08 L 57/00<br>C 08 F 220/00<br>C 08 F 246/00<br>C 08 F 20/00 |
| A | US - A - 4 200 562 (YOSHIOKA et al.)<br>* Claims *<br>---- | 1 | |

X The present search report has been drawn up for all claims

| Place of search | Date of completion of the search | Examiner |
|---|---|---|
| VIENNA | 11-11-1982 | KAHOVEC |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document

EPO Form 1503. 03 82